# EUROPÄISCHE PATENTSCHRIFT

(11) **EP 2 212 084 B1**
(45) Veröffentlichungstag und Bekanntmachung des Hinweises auf die Patenterteilung: **05.03.2014**
(21) Anmeldenummer: 08841848.8
(22) Anmeldetag: 22.10.2008
(51) Int. Cl.: B29C 45/46, B29C 45/17, B30B 15/04

(54) **SPRITZGIESSMASCHINE MIT SCHUTZVERKLEIDUNG**
INJECTION MOLDING MACHINE WITH PROTECTIVE COVERING
MACHINE DE MOULAGE PAR INJECTION AVEC CARTER DE PROTECTION

(30) Priorität: 22.10.2007 DE 102007050689
(43) Veröffentlichungstag der Anmeldung: 04.08.2010
(73) Patentinhaber: Zhafir Plastics Machinery GmbH, 92263 Ebermannsdorf (DE)
(72) Erfinder: RABE, Hans, 92289 Ursensollen (DE); ISSEL, Dirk, 91207 Lauf (DE); FRITZLAR, Volker, 92224 Amberg (DE); MEYER, Jörg, 92235 Kümmersbruck (DE); FRANZ, Steffen, 92224 Amberg (DE); FENSTERER, Andreas, 92224 Amberg (DE)
(74) Vertreter: Schneider, Andreas
(86) Internationale Anmeldenummer: PCT/EP2008/008929
(87) Internationale Veröffentlichungsnummer: WO 2009/053045

(56) Entgegenhaltungen:
- WO-A-03/055662
- WO-A-2004/082916
- DE-U1- 20 213 992
- FR-A- 2 569 609

## Beschreibung

Die Erfindung betrifft eine Spritzgießmaschine.

Spritzgießmaschinen sind in vielfältiger Ausgestaltung aus dem Stand der Technik bekannt und verfügen üblicherweise zur Übertragung der von einem Schließmechanismus erzeugten Kraft über vier zylindrische Holme. Von Nachteil dabei ist, daß diese Holme innerhalb des Raumes zwischen den Werkzeugaufspannplatten angeordnet sind und daher die Größe der Werkzeugformen begrenzen.

Weiterhin bekannt sind holmlose Spritzgießmaschinen, bei denen der Schließmechanismus und die Werkzeugaufspannplatten in einem C-förmigen Maschinenrahmen angeordnet sind. Eine solche holmlose Spritzgießmaschine ist beispielsweise in der AT 391 293 B beschrieben. Dem Vorteil einer derartigen holmlosen Spritzgießmaschine, nämlich die leichtere Zugänglichkeit des Raumes zwischen den Werkzeugaufspannplatten, steht als Nachteil gegenüber, daß der Maschinenrahmen einer solchen Spritzgießmaschine in einer kostspieligen Massivbauweise ausgeführt werde muß, um ein Aufbiegen der Schenkel des Maschinenrahmens unter der Einwirkung der Schließkraft zu verhindern. Zugleich sind aufwendige Mechanismen erforderlich, um die benötigte Parallelität zwischen den werkzeugaufspannplatten sicherzustellen.

WO03/055662 A offenbart eine Spritzgießmaschine mit einer Schließeinheit, Seitenwänden und die Seitenwände miteinander verbindenden Traversen. WO 2004/082916 A zeigt einen kräfteaufnehmenden Rahmen für eine Spritzeinheit einer Spritzgießmaschine. In FR 2569609 A ist ein Rahmen für die Schließeinheit einer Spritzgießmaschine beschrieben. DE 20213992 U1 zeigt eine Spritzgießmaschine mit einem Maschinenrahmen mit fensterartigen Öffnungen.

Ein weiterer Nachteil bekannter Spritzgießmaschinen besteht darin, daß eine Schutzverkleidung in aufwendiger Art und Weise an der Maschine angebracht werden muß.

Eine Aufgabe der vorliegenden Erfindung ist es, eine Spritzgießmaschine bereitzustellen, welche die oben genannten Nachteile nicht aufweist.

Diese Aufgabe wird durch eine Spritzgießmaschine nach Anspruch 1 gelöst. Danach ist eine Spritzgießmaschine mit einer Schließeinheit, mit einer Spritzeinheit und mit einem Gestell für die Schließeinheit und mit einem Gestell für die Spritzeinheit vorgesehen, wobei das Gestell für die Schließeinheit wenigstens zwei Seitenwände sowie die Seitenwände miteinander verbindende Traversen aufweist und ein geschlossenes System bildet derart, daß es die von der Schließeinheit aufgebrachten Kräfte aufnimmt und wobei das Gestell für die Spritzeinheit wenigstens zwei Seitenwände sowie die Seitenwände miteinander verbindende Traversen aufweist und ein geschlossenes System bildet derart, daß es die von der Spritzeinheit aufgebrachten Kräfte aufnimmt. In dem Fall, daß sowohl die Kräfte der Schließeinheit, als auch die Kräfte der Spritzeinheit aufgenommen werden sollen, können sowohl zwei getrennte Gestelle, als auch ein gemeinsames Gestell für Schließ- und Spritzeinheit zum Einsatz kommen. Erfindungswesentlich ist, daß die Seitenwände des Gestells eine im wesentlichen vollständige Schutzverkleidung für die Schließeinheit und die Spritzeinheit bilden.

Eine Kernidee der Erfindung ist es mit anderen Worten, die in der Spritzgießmaschine wirkenden Kräfte nicht durch Holme, sondern durch ein geschlossenes System in Form eines Gestells abzuleiten bzw. aufzunehmen. Der Begriff "geschlossenes System" bedeutet in diesem Zusammenhang einerseits, daß es sich bei dem Gestell nicht um einen offenen, beispielsweise C-förmigen Rahmen oder dergleichen handelt, und andererseits, daß die während des Betriebs der Maschine von der Schließeinheit und/oder der Spritzeinheit eingebrachten Kräfte im wesentlichen vollständig von dem Gestell aufgenommen werden und daher keine oder nur einer vergleichsweise sehr geringe Weiterleitung dieser Kräfte in das Maschinenbett bzw. den Maschinenrahmen erfolgt. Dieser dient somit nur noch zur Abstützung des geschlossenen Systems und muß daher deutlich weniger massiv und verwindungssteif und in weniger hoher Verarbeitungsqualität ausgeführt werden, was die Gesamtkosten der Spritzgießmaschine verringert. Die Schließ- bzw. Spritzeinheit kann somit mit nahezu jedem beliebigen Maschinenbett verwendet werden.

Mit Hilfe der Erfindung lassen sich die Vorteile holmloser Spritzgießmaschinen, insbesondere der einfache Werkzeugeinbau und -ausbau, sowie die Vorteile herkömmlicher Spritzgießmaschine vier Holmen, insbesondere die gleichmäßige Kraftverteilung, vereinen.

Mit der Erfindung wird eine Spritzgießmaschine geschaffen, bei der der Raum zwischen den Werkzeugaufspannplatten uneingeschränkt nutzbar ist. Von Vorteil ist weiterhin, daß die Weiterleitung der Schließ- bzw. Spritzkraft nicht über den Maschinenrahmen erfolgt. Die Kräfte werden in dem geschlossenen System gehalten. Ein Aufbiegen des geschlossenen System, wie dies bei einem C-Rahmen der Fall war, ist ausgeschlossen. Gegenüber anderen Lösungen zeichnet sich die Erfindung zudem dadurch aus, daß die Parallelität der Werkzeugaufspannplatten ohne zusätzliche Mechanismen gewährleistet ist.

Die Seitenwände bestimmen das äußere Erscheinungsbilder der Maschine wesentlich. Sie sind dabei erfindungsgemäß derart ausgebildet, daß sie eine Schutzverkleidung für die Schließ- und oder die Spritzeinheit bilden und die üblicherweise verwendeten Schutzbleche im wesentlichen vollständig ersetzen. Damit ist die Nutzung zusätzlicher Verkleidungselemente nahezu oder vollständig überflüssig. Falls dennoch weitere Verkleidungselement benötigt werden, beispielsweise kleinere Zusatzbleche, können diese sehr leicht und kostengünstig angebracht werden. Anders formuliert dient die Schutzverkleidung der Schließ- bzw. Spritzeinheit zur Aufnahme der Kräfte und zur Ausbildung eines geschlossenen Systems.

Vorteilhafte Ausführungen der Erfindung sind in den Unteransprüchen angegeben.

Das Gestell der Schließ- bzw. der Spritzeinheit besteht vorzugsweise aus zwei Seitenwänden. Zwischen den Seitenwänden sind Traversen in beliebiger Anzahl so verteilt, daß sich ein geschlossenes System zur Aufnahme der Kräfte von Schließ- bzw. Spritzeinheit ergibt. Durch ein gezieltes, in Anzahl beliebiges Anbringen von Traversen zwischen den Seitenwänden ist eine sehr flexible Stabilisierung des Gestells und eine Anpassung an verschiedene Maschinenparameter möglich. Die Traversen können verschiedene Längen aufweisen, so daß die Gestellbreite variiert werden kann. Die Kraft wird in die Seitenwände beispielsweise über Bolzen oder Keile eingeleitet, die zur Verbindung der Traversen mit der Seitenwand dienen. Zwischen den Traversen wird dann die Kraft der Schließ- oder Spritzeinheit aufgenommen und in dem geschlossenen System (Seitenwände mit Traversen) verteilt. Hierzu sind die Traversen vorzugsweise symmetrisch angeordnet. Das gesamte System nimmt somit die Kräfte der Schließ- bzw. Spritzeinheit auf und gibt im Zusammenspiel von Seitenwänden und Traversen dem System die erforderliche Elastizität, die für den Kraftaufbau wie bei einem Kniehebelantrieb erforderlich ist. Bildhaft gesprochen nimmt das gesamte System mit Hilfe seiner Eigenelastizität die Dehnung der herkömmlichen Holme auf.

Besonders vorteilhaft ist es, wenn die Seitenwände und/oder die Traversen zugleich die Massekräfte einiger oder aller beweglichen Teile der Schließeinheit und/oder der Spritzeinheit tragen, zu welchem Zweck an den Seitenwänden und/oder den Traversen Halte-, Führungs- und/oder Befestigungselemente für diese Teile vorgesehen sind. Anders ausgedrückt dienen die Seitenwände und/oder die Traversen nicht nur dazu, die Kräfte der Spritz- und/oder Schließeinheit aufzunehmen, sondern auch als tragende Elemente für wesentliche Teile der Spritzgießmaschine, insbesondere die bewegliche sowie die feststehende Werkzeugaufspannplatte. Durch diese direkte Anbindung an den Seitenwänden bzw. den Traversen entfallen aufwendige und teure zusätzliche Befestigungs- bzw. Montagevorrichtungen, wodurch sich die Gesamtkosten der Maschine weiter verringern.

Die Spritzgießmaschine umfaßt eine feststehende Werkzeugaufspannplatte und eine bewegliche Werkzeugaufspannplatte zur Aufnahme der Formwerkzeughälften, wobei die bewegliche Werkzeugaufspannplatte mittels eines Antriebs translatorisch antreibbar ist. Bei dem Antrieb kann es sich um den Schließmechanismus oder einen separaten Eilgangsantrieb handeln. Im Hinblick auf die von der Schließeinheit aufgebrachten Kräfte hat es sich als besonders vorteilhaft erwiesen, wenn die feststehende Werkzeugaufspannplatte und das abstützende Element des Antriebs fest mit den Seitenwänden des Gestells verbunden sind derart, daß die Schließkraft der Schließeinheit über das geschlossene System auf die feststehende Werkzeugaufspannplatte geleitet wird.

Für eine besonders einfache, sichere und dennoch belastbare Befestigung von Maschinenteilen an dem Gestell sind an den Seitenwänden Führungen vorgesehen. Insbesondere sind zur Aufnahme der beweglichen Werkzeugaufspannplatte unmittelbar an den Innenseiten der Seitenwände des Gestells für die Schließeinheit Führungen befestigt, an deren Führungswagen die bewegliche Werkzeugaufspannplatte gekoppelt ist. Die Seitenwände dienen mit anderen Worten nicht nur zur Übertragung der Schließkräfte, sondern zugleich zur Führung der beweglichen Werkzeugaufspannplatte. Vorzugsweise bilden somit die Seitenwände, die Werkzeugaufspannplatten und alle Antriebskomponenten der Schließeinheit ein in sich geschlossenes System zur Kraftaufnahme. Der Antrieb des Schließmechanismus der Schließeinheit kann ebenfalls mit Hilfe derartiger Führungen verfahrbar sein.

Ist auch eine Aufnahme von Kräften der Spritzeinheit durch das Gestell vorgesehen, dann ist die Maschine vorzugsweise derart ausgestaltet, daß das fahrbare Einspritzaggregat der Spritzeinheit zwischen den Seitenwänden aufgenommen ist.

In diesem Fall sind zur Einleitung der Düsenanlagekraft die Seitenwände vorzugsweise unmittelbar an der feststehenden Werkzeugaufspannplatte befestigt. Dadurch wird verhindert, daß die Düsenanlagekraft ein Kippen der feststehenden Werkzeugaufspannplatte verursacht. Zugleich hat es sich als besonders sinnvoll erwiesen, auf der Seite, die der Befestigung der feststehenden Werkzeugaufspannplatte mit den Seitenwänden gegenüberliegt, Traversen zwischen den Seitenwänden vorzusehen, die einen definierten Abstand der Seitenwände zueinander gewährleisten.

Zur Aufnahme des Einspritzaggregats zwischen den Seitenwänden sind an den Seitenwänden des Gestells für die Spritzeinheit Führungen vorgesehen, wie sie oben bereits im Zusammenhang mit der Befestigung der bewegliche Werkzeugaufspannplatte an dem Gestell für die Schließeinheit beschrieben wurden.

Unabhängig davon, ob das Gestell allein zur Aufnahme der Kräfte der Schließeinheit, allein zur Aufnahme der Kräfte der Spritzeinheit oder zur Aufnahme der Kräfte beider Einheiten ausgebildet ist, haben sich die folgenden Ausführungsformen bewährt.

Sind in den Seitenwänden im Bereich des Werkzeugraumes der Schließeinheit und/oder im Bereich des Düsenraumes der Spritzeinheit fensterartige Öffnungen angeordnet, wird ein einfacher Zugriff in den Werkzeugraum bzw. den Düsenraum ermöglicht, ohne daß hierdurch die Funktionalität des Gestells, insbesondere dessen Kraftaufnahme- und Massenkrafttragfunktion beeinträchtigt wird. Die Höhe der Fensteröffnungen entspricht vorzugsweise der Höhe der Aufspannplatten, so daß sich der Zugriff hierauf stark vereinfacht. Durch den Wegfall der Holme ist zudem ein sehr einfacher Ein- und Ausbau der Spritzgießformen zwischen den Seitenwänden nach oben und unten sowie zur Seite möglich.

Sind die derart vorgesehenen Öffnungen mit Schutztüren versehen, können hohe Sicherheitsanforderungen erfüllt werden. Die Schutztüren sind also direkt mit den Seitenwänden verbindbar und es bedarf keiner zusätzlichen Halte- oder Montagerahmen. Sind die Schutztüren verfahrbar an einer Seitenwand befestigt, vorzugsweise unter Verwendung einer an den Seitenwänden angeordneten Führungen, dann kann das Öffnen bzw. Verschließen der fensterartigen Öffnungen nicht nur besonders einfach, sondern zugleich auch sehr sicher und zuverlässig erfolgen. Anstelle der mit Türen versehenen Öffnungen können auch Sichtfenster vorgesehen sein. Türen und Sichtfenster können auch an den Traversen befestigt sein, so daß eine auch außerhalb der Seitenwände nahezu vollständig abgeschlossene Maschineneinheit geschaffen werden kann.

Sind die Seitenwände gleich oder spiegelgleich ausgebildet, ergibt sich ein konstruktiv besonders einfach aufgebautes und somit preiswert herstellbares Gestell. Zugleich ist bei einem derartigen Aufbau sowohl die Aufnahme der Spritz- und/oder Schließkräfte, als auch die Montage der Maschinenteile besonders einfach realisierbar.

Ausführungsbeispiele der Erfindung werden nachfolgend anhand der Zeichnungen näher erläutert. Hierbei zeigen:
- Fig. 1: eine erste Ausführungsform der Erfindung mit einer Schließeinheit,
- Fig. 2: die Schließeinheit aus Fig. 1 in einem Querschnitt vor dem Antrieb für den Schließmechanismus,
- Fig. 3: eine weitere Ausführungsform der Erfindung mit einer Schließeinheit,
- Fig. 4: eine Montageeinheit aus Seitenwänden und Konsolen, wie sie in der in Fig. 3 dargestellten Ausführungsform zur Anwendung kommt,
- Fig. 5: eine Schließeinheit gemäß einer weiteren Ausführungsform der Erfindung mit innenliegenden Schiebetüren,
- Fig. 6: die Schließeinheit aus Fig. 5 in einem Querschnitt zwischen den Werkzeugaufspannplatten,
- Fig. 7: eine weitere Ausführungsform der Erfindung mit einer Spritzeinheit, und

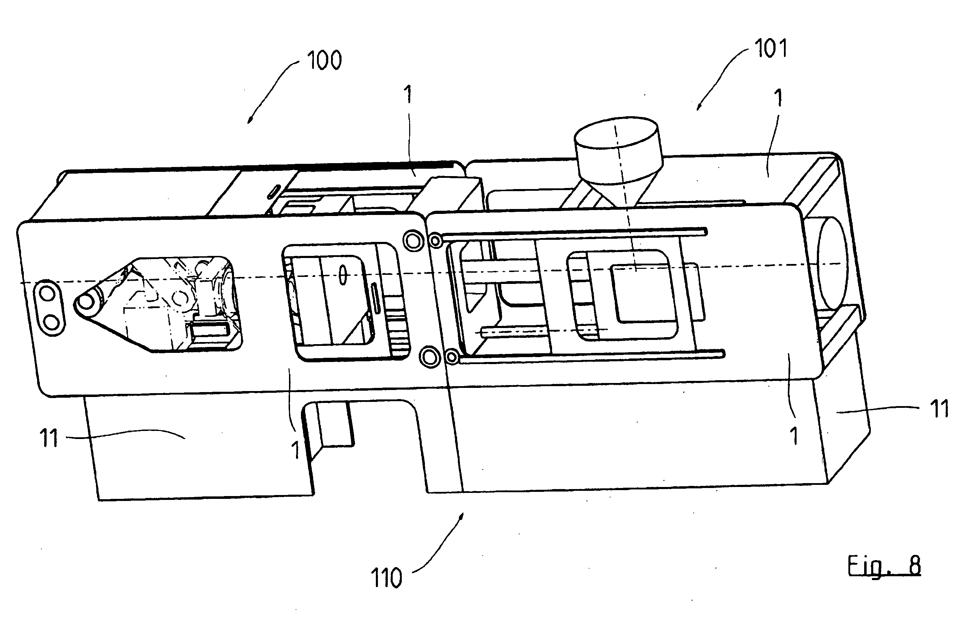

- Fig. 8: eine Spritzgießmaschine mit einer erfindungsgemäßen Schließeinheit und einer erfindungsgemäßen Spritzeinheit.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

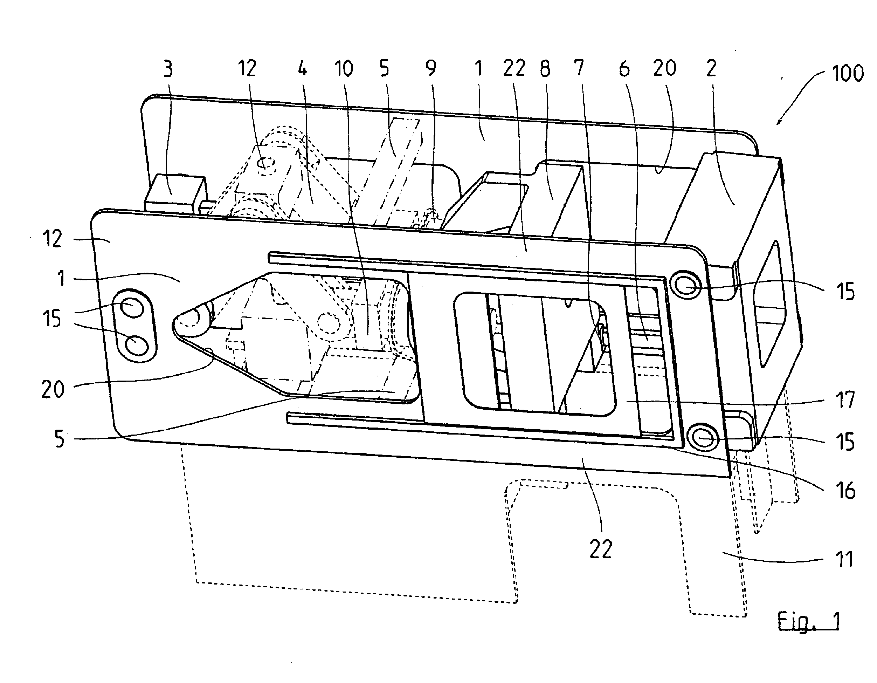

Die in Fig. 1 dargestellte Schließeinheit 100 einer Spritzgießmaschine zeigt eine vordere und hintere Seitenwand 1. Die Seitenwände 1 weisen die Form aufrecht stehender Platten auf und erstrecken sich im wesentlichen über die gesamte Länge der Schließeinheit 100. Die Seitenwände 1 sind unmittelbar mit einer feststehenden Werkzeugaufspannplatte 2 und einer Aufnahmekonsole 3 für den Schließmechanismus 4 mittels Bolzen 15 und weiteren Versteifungskonsolen 5 verbunden. Bei dem Schließmechanismus 4 handelt es sich um einen Kniehebelschließmechanismus mit einem Antrieb 12. Die Versteifungskonsolen 5 dienen als Traversen (Streben) und bilden mit den Seitenwänden 1 das erfindungsgemäße Gestell für die Schließeinheit, welches den gesamten Kraftfluß beim Schließkraftaufbau aufnimmt bzw. überträgt. Das Gestell liegt mit den Seitenwänden 1 auf dem Maschinenbett 11 der Schließeinheit 100 auf. Die Seitenwände 1 dienen zugleich als Schutzverkleidung.

An den Innenseiten der Seitenwänden 1 sind in Maschinenlängsrichtung Führungsschienen 6 befestigt, auf denen sich Führungswagen 7 bewegen. Die Führungswagen 7 nehmen eine bewegliche Werkzeugaufspannplatte 8, eine Werkzeughöhenverstellung 9 und ein Gegenlager 10 für den Schließmechanismus 4 auf. An jeder Seitenwand 1 ist mindestens eine Führungsschiene 6 vorgesehen. Für eine besonders sichere Führung können die Führungsschienen aber auch auf jeder Seitenwand 1 paarweise (oben und unten) angeordnet sein.

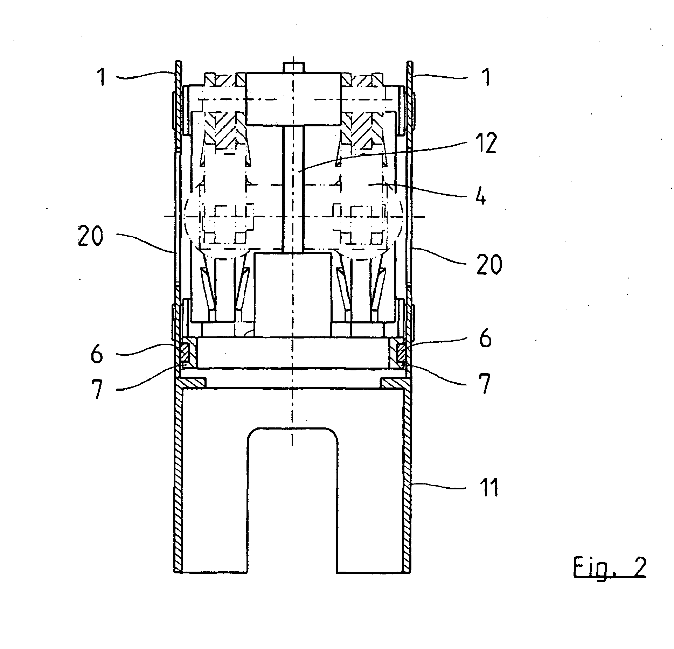

Wie aus Fig. 2 hervorgeht, ist auch der Antrieb 12 für den Schließmechanismus 4 über Führungswagen 7 auf Führungsschienen 6 verschiebbar gelagert. Auch hier können paarweise Führungsschienen (oben und unten) vorgesehen sein.

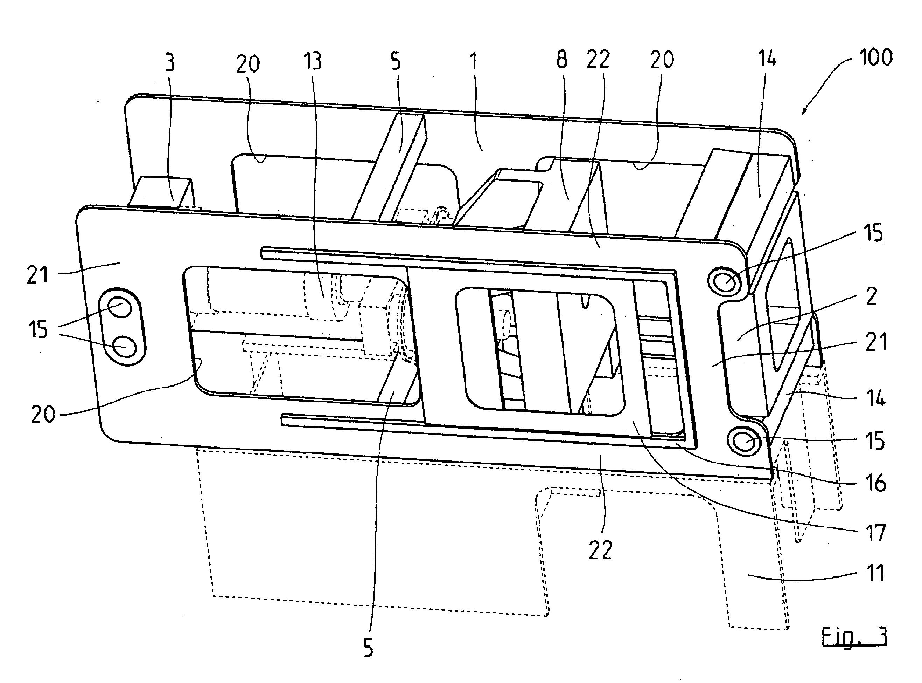

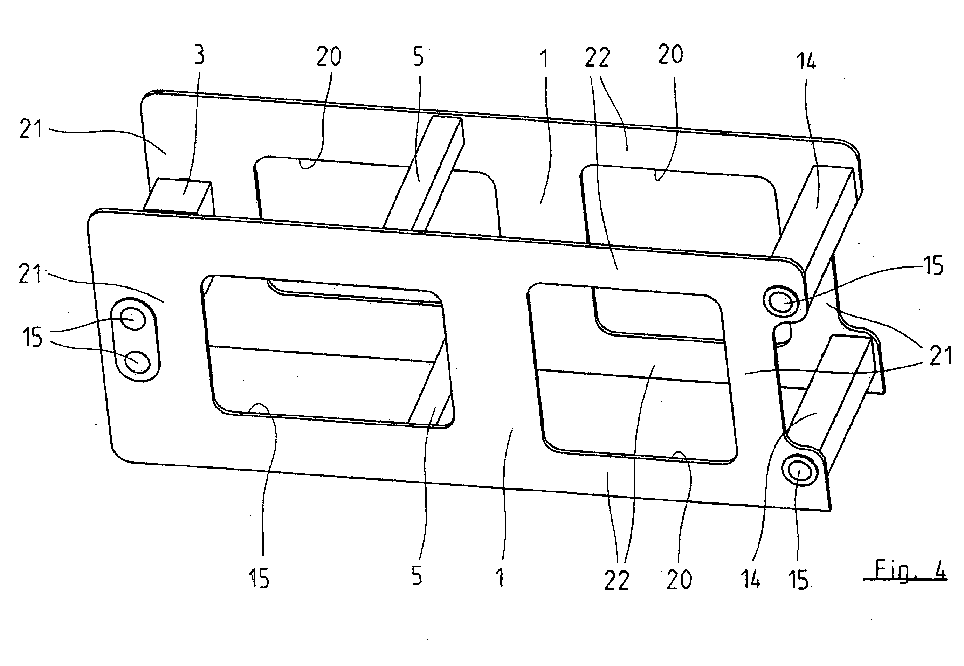

Die in Fig. 3 dargestellte Schließeinheit, hier alternativ mit einem hydraulischen Schließsystem 13, zeigt eine Ausführungsform, bei der die beiden Seitenwände 1 mit der Aufnahmekonsole 3, den Versteifungskonsolen 5 und den Krafteinleitungskonsolen 14 und Bolzen 15 eine Montageeinheit bilden. Die feststehende Werkzeugaufspannplatte 2 ist fest mit den Krafteinleitungskonsolen 14 verbunden. Diese Anordnung hat den Vorteil, daß Seitenwände 1 und Konsolen 5 und Krafteinleitungskonsolen 14 eine vormontierbare Einheit bilden und die feststehende Werkzeugaufspannplatte 2 für die Plattenparallelität justierbar an den Krafteinleitungskonsolen 14 befestigt wird. Die in Fig. 4 dargestellte Montageeinheit besteht aus den Seitenwänden 1 mit der durch Bolzen 15 fest verbundenen Aufnahmekonsole 3, den Versteifungskonsolen 5 und den Krafteinleitungskonsolen 14.

Die beiden oben beschriebenen Ausführungsformen zeichnen sich somit zum einen dadurch aus, daß die Seitenwände 1 über Bolzen 15 oder Keile mit Traversen bzw. Konsolen 3, 5, 14 und/oder der feststehenden Werkzeugaufspannplatte 2 und mit dem abstützenden Element des Schließmechanismus 4, 13 zusammen ein geschlossenes System ergeben, in dem die Schließkräfte aufgenommen werden. Zum anderen tragen die Seitenwände auch die Massenkräfte der beweglichen Teile der Schließeinheit 100. Zur Montage der Konsolen 3, 5 und Bolzen 15 oder Keile usw. sind an den Innenseiten der Seitenwände 1 bearbeitete Flächen und Bohrungen vorgesehen.

Durch die Anordnung der Seitenwände 1 links und rechts neben der feststehenden Werkzeugaufspannplatte 2 wird erreicht, daß der Raum bis zur beweglichen Werkzeugaufspannplatte 8 voll für das Formwerkzeug nutzbar ist. Zur Zugänglichkeit zum Werkzeugraum weisen die Seitenwände 1 entsprechende Öffnungen 20 auf. Darüber hinaus sind weitere Öffnungen für die Montage des Schließmechanismus 4, 13 vorgesehen. Die Seitenwände 1 müssen für ihre Verwendung als Teil des geschlossenen Systems also nicht durchgehend plattenförmig ausgebildet sein, sondern können auch Öffnungen aufweisen. In den hier beschriebenen Ausführungsformen der Erfindung sind die Seitenwände 1 derart mit Öffnungen versehen, daß sie jeweils neben einer vorderen und einer hinteren Vertikalstrebe 21 eine obere und eine untere Horizontalstrebe 22 umfassen. Solange die Seitenwände 1 mit den Traversen ein Gestell bilden, welches das Prinzip des geschlossenen Systems verwirklicht, können die Seitenwände 1 aber auch eine andere Form aufweisen. Die Seitenwände 1 müssen dabei nicht auf die Form eines Rahmens beschränkt sein. Beispielsweise sind auch T-förmige Seitenwände möglich, die sich aus einer Vertikal- und einer Horizontalstrebe zusammensetzen.

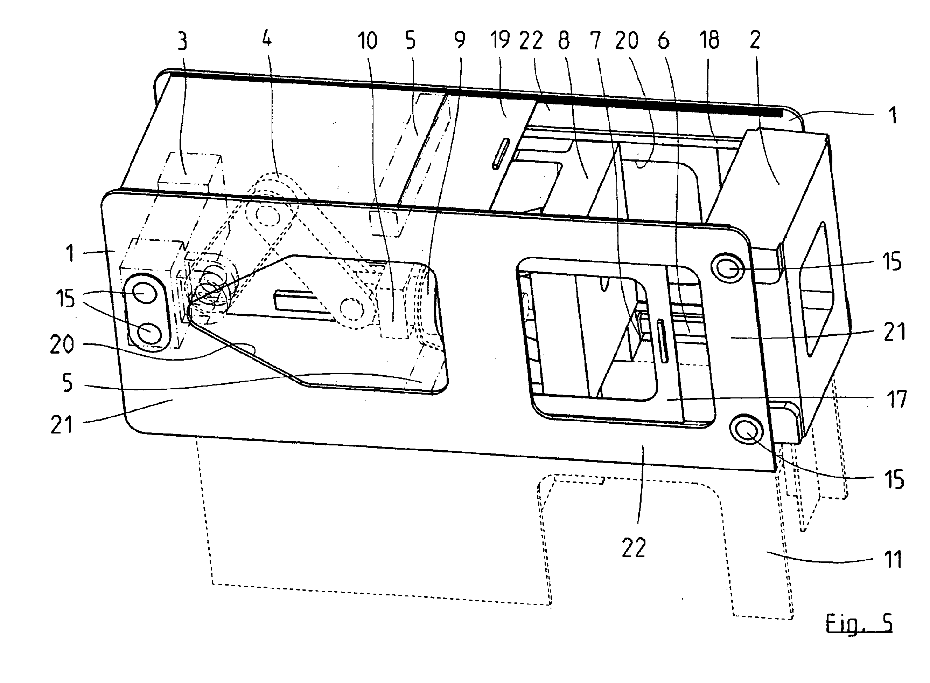

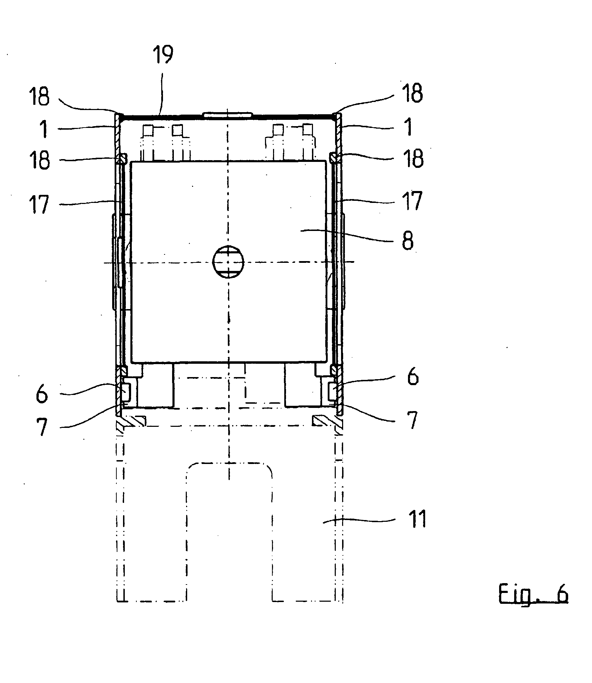

An den Außenseiten der Seitenwände 1 sind Rahmen 16 für Schutztüren 17 für den Werkzeugraum befestigt. Anstelle der Rahmen 16 können aber auch an den Außenseiten der Seitenwände 1 befestigte Linearführungen 18 verwendet werden. Alternativ können die Schutztüren auch in Linearführungen 18 laufen, die direkt an den Innenseiten der Seitenwände befestigt sind. Eine solche Ausführungsform ist in den Fig. 5 und 6 abgebildet. An den Oberkanten der Seitenwände 1 sind darüber hinaus weitere Linearführungen 18 vorgesehen, in denen Schiebetüren 19 verfahrbar gehalten werden. Im Bereich des Schließmechanismus 4 sind in den Seitenwänden Öffnungen 20 in Form von Sichtfenster vorgesehen, die durch herausnehmbare Sichtscheiben oder Bleche abgedeckt oder mit verschiebbaren Schutztüren versehen sind. Die Schutztüren 17 können untereinander oder auch mit den Schiebetüren 19 gekoppelt sein, so daß eine gemeinsame Betätigung möglich ist.

Nachfolgend wird eine erfindungsgemäße Spritzeinheit 101 beschrieben. Dabei gelten die zuvor mit Bezug auf die Schließeinheit 100 getroffenen Aussagen analog. Ebenso sind die oben beschriebenen Angaben hinsichtlich der Führungen, der Schutzverkleidungen, der Türen etc. entsprechend gültig. Auf diese Punkte wird daher nachfolgend nicht mehr gesondert eingegangen.

Die Spritzeinheit 101, die direkt mit der feststehenden Werkzeugaufspannplatte 2 verbunden ist, weist ein fahrbares Einspritzaggregat 23 auf, welches durch die feststehenden 2 Werkzeugaufspannplatte in die Werkzeugform mündet.

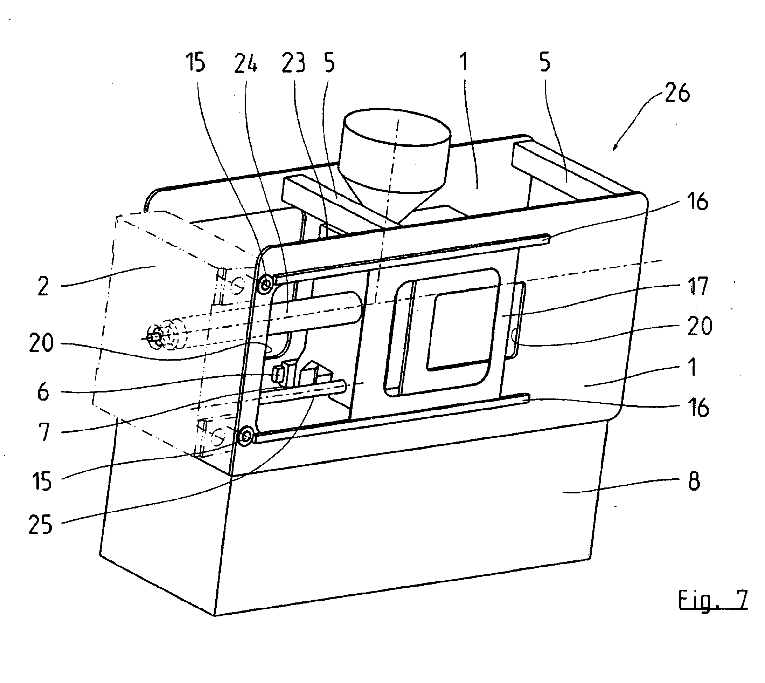

Die in Fig. 7 dargestellte Spritzeinheit 101 zeigt eine vordere und hintere Seitenwand 1, die unmittelbar mit der feststehenden Werkzeugaufspannplatte 2 und Traversen 5 verbunden sind. Zur Aufnahme des Einspritzaggregats 23 zwischen den Seitenwänden 1 sind an den Seitenwänden 1 Führungen vorgesehen, wie sie oben bereits im Zusammenhang mit der Befestigung der bewegliche Werkzeugaufspannplatte 8 an dem Gestell für die Schließeinheit 100 beschrieben wurden. Insbesondere sind an den Innenseiten der Seitenwände 1 Führungsschienen 6 befestigt, deren Führungswagen 7 das Einspritzaggregat 23 mit der Plastifiziereinheit 24 aufnehmen. Die Seitenwände 1 liegen auf dem Maschinenbett 11 der Spritzeinheit 101 auf und sind symmetrisch durch Verbindungsbolzen 15 mit der feststehenden Werkzeugaufspannplatte 2 gekoppelt. Die Verbindungsbolzen 15 sind so angeordnet, daß die über eine Zug- oder Druckstange 25 aufgebrachte Düsenanlagekraft ein Kippen der feststehenden Werkzeugaufspannplatte 2 nicht zuläßt. An den Außenseiten der Seitenwände 1 sind Rahmen 16 für Düsenraumschutztüren 17 angeordnet.

Als besonders sinnvoll hat es sich erwiesen, auf der Seite 26 des Gestells, die der Befestigung der feststehenden Werkzeugaufspannplatte 2 mit den Seitenwänden 1 gegenüberliegt, Traversen 5 zwischen den Seitenwänden 1 vorzusehen, die einen definierten Abstand der Seitenwände 1 zueinander gewährleisten.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: Seitenwand
- 2: feststehende Werkzeugaufspannplatte
- 3: Aufnahmekonsole
- 4: mechanischer Schließmechanismus
- 5: Versteifungskonsole
- 6: Führungsschiene
- 7: Führungswagen
- 8: bewegliche Werkzeugaufspannplatte
- 9: Werkzeughöhenverstellung
- 10: Gegenlager
- 11: Maschinenbett
- 12: Antrieb für Schließmechanismus
- 13: hydraulisches Schließsystem
- 14: Krafteinleitungskonsole
- 15: Bolzen
- 16: Rahmen
- 17: Schutztüren
- 18: Linearführung
- 19: Schiebetür
- 20: Öffnung
- 21: Vertikalstrebe
- 22: Horizontalstrebe
- 23: Einspritzaggregat
- 24: Plastifiziereinheit
- 25: Zug-/Druckstange
- 26: abgewandte Seite
- 100: Schließeinheit
- 101: Spritzeinheit
- 110: Spritzgießmaschine

## Patentansprüche

1. Spritzgießmaschine (110) mit einer Schließeinheit (100) und einer Spritzeinheit (101), in der ein Gestell mit Seitenwänden (1) und die Seitenwände (1) miteinander verbindenden Traversen (5, 14) als geschlossenes System die Kräfte der Schließeinheit (100) aufnimmt und in der ein Gestell mit Seitenwänden (1) und die Seitenwände (1) miteinander verbindenden Traversen (5, 14) als geschlossenes System die Kräfte der Spritzeinheit (101) aufnimmt, wobei die Seitenwände (1) eine im wesentlichen vollständige Schutzverkleidung für die Schließeinheit (100) und die Spritzeinheit (101) bilden.

2. Spritzgießmaschine (110) nach Anspruch 2, mit in den Seitenwänden (1) im Bereich des Werkzeugraumes der Schließeinheit (100) und/oder im Bereich des Düsenraumes der Spritzeinheit (101) angeordneten fensterartigen Öffnungen.

3. Spritzgießmaschine (110) nach Anspruch 2, mit wenigstens einer zum Öffnen bzw. Verschließen einer solchen fensterartigen Öffnung vorgesehenen Schutztür (17) für den Werkzeugraum bzw. den Düsenraum.

4. Spritzgießmaschine (110) nach Anspruch 3, wobei die Schutztür (17) verfahrbar an einer Seitenwand (1) befestigt ist, vorzugsweise unter Verwendung einer an der Seitenwand angeordneten Führung (16, 18).

5. Spritzgießmaschine (110) nach einem der Ansprüche 1 bis 4, wobei die Seitenwände (1) und/oder die Traversen (5, 14) die Massekräfte einiger oder aller beweglichen Teile der Schließeinheit (100) und/oder der Spritzeinheit (101) tragen, zu welchem Zweck an den Seitenwänden (1) und/oder den Traversen (5, 14) Halte-, Führungs- und/oder Befestigungselemente (15) für diese Teile vorgesehen sind.

6. Spritzgießmaschine (110) nach einem der Ansprüche 1 bis 5, mit einer feststehenden Werkzeugaufspannplatte (2) und einer beweglichen Werkzeugaufspannplatte (8) zur Aufnahme der Formwerkzeughälften, wobei die bewegliche Werkzeugaufspannplatte (8) mittels eines Antriebs (4, 13) translatorisch antreibbar ist, und wobei die feststehende Werkzeugaufspannplatte (2) und das abstützende Element (3) des Antriebs (4, 13) fest mit den Seitenwänden (1) verbunden sind derart, daß die Schließkraft der Schließeinheit (100) über das geschlossene System auf die feststehende Werkzeugaufspannplatte (2) geleitet wird.

7. Spritzgießmaschine (110) nach Anspruch 6, mit an den Seitenwänden (1) angeordneten Führungen (16) zur Aufnahme der beweglichen Werkzeugaufspannplatte (8) und oder zur Aufnahme des Antriebs (12) des Schließmechanismus (4, 13).

8. Spritzgießmaschine (110) nach einem der Ansprüche 1 bis 7, wobei die Spritzeinheit (101) ein fahrbares Einspritzaggregat (23) aufweist, das zwischen den Seitenwänden (1) aufgenommen ist.

9. Spritzgießmaschine (110) nach Anspruch 8, wobei die Seitenwände (1) an der feststehenden Werkzeugaufspannplatte (2) zur Einleitung der Düsenanlagekraft befestigt sind.

10. Spritzgießmaschine (110) nach Anspruch 9, wobei auf der Seite (26), die der Befestigung der feststehenden Werkzeugaufspannplatte (2) mit den Seitenwänden (1) gegenüberliegt, Traversen (5) zwischen den Seitenwänden (1) vorgesehen sind, die einen definierten Abstand der Seitenwände (1) zueinander gewährleisten.

11. Spritzgießmaschine (110) nach einem der Ansprüche 8 bis 10, mit an den Seitenwänden (1) angeordneten Führungen (16) zur Aufnahme des Einspritzaggregats (23).

12. Spritzgießmaschine (110) nach einem der Ansprüche 1 bis 11, wobei die Seitenwänden (1) gleich oder spiegelgleich sind.

## Claims

1. An injection molding machine (110) with a closing unit (100) anc an injection unit (101), in which a frame with sidewalls (1) and traverses (5, 14) connecting the sidewalls (1) to each other receives the forces of the closing unit (100) as a closed system, and in which a frame with sidewalls (1) and traverses (5, 14) connecting the sidewalls (1) to each other receives the forces of the injection unit (101) as a closed system, wherein the sidewalls (1) form a substantially complete protective jacketing for the closing unit (100) and the injection unit (101).

2. The injection molding machine (110) according to Claim 1, with window-like openings arranged in the sidewalls (1) in the vicinity of the tool space of the closing unit (100) and/or in the vicinity of the nozzle space of the injection unit (101).

3. The injection molding machine (110) according to Claim 2, with at least one protection door (17) for the tool space or the nozzle space, which door is provided for opening and closing such a window-like opening.

4. The injection molding machine (110) according to Claim 3, wherein the protection door (17) is movably fastened on a sidewall (1), preferably using a guide (16, 18) arranged on the sidewall.

5. The injection molding machine (110) according to one of Claims 1 to 4, wherein the sidewalls (1) and/or the traverses (5, 14) carry the massive forces of a few or of all movable parts of the closing unit (100) and/or of the injection unit (101), to which end elements (15) of holding, guidance and/or fastening for these parts are provided on the sidewalls (1) and/or or the traverses (5, 14).

6. The injection molding machine (110) according to one of Claims 1 to 5, with a stationary tool clamping plate (2) and a movable tool clamping plate (8) for receiving the mold tool halves, wherein the movable tool clamping plate (8) can be translatorily driven by a drive (4, 13), and wherein the stationary tool clamping plate (2) and the supporting element (3) of the drive (4, 13) are permanently connected to the sidewalls (1) in such a manner that the closing force of the closing unit (100) is conducted via the closed system onto the stationary tool clamping plate (2).

7. The injection molding machine (110) according to Claim 6, with guides (16) arranged on the sidewalls (1) for receiving the movable tool clamping plate (8) and/or for receiving the drive (12) of the closing mechanism (4, 13).

8. The injection molding machine (110) according to one of Claims 1 to 7, wherein the injection unit (101) comprises a movable injection aggregate (23) received between the sidewalls (1).

9. The injection molding machine (110) according to Claim 8, wherein the sidewalls (1) are fastened on the stationary tool clamping plate (2) in order to introduce the nozzle contact force.

10. The injection molding machine (110) according to Claim 9, wherein traverses (5) are provided between the sidewalls (1) on the side (26) opposite the fastening of the stationary tool clamping plate (2) to the sidewalls (1), which traverses ensure a defined distance of the sidewalls (1) to each other.

11. The injection molding machine (110) according to one of Claims 8 to 10, with guides (16) arranged on the sidewalls (1) for receiving the injection aggregate (23).

12. The injection molding machine (110) according to one of Claims 1 to 11, in which the sidewalls (1) are equal or have mirror symmetry.

## Revendications

1. Machine de moulage par injection (110) avec une unité de fermeture (100) et une unité d'injection (101), dans laquelle une charpente comportant des parois latérales (1) et des traverses (5, 14) reliant les parois latérales (1) l'une à l'autre comme système fermé reprend les efforts de l'unité de fermeture (100) et dans laquelle une charpente avec des parois latérales (1) et des traverses (5, 14) reliant les parois latérales (1) l'une à l'autre comme système fermé reprend les efforts de l'unité d'injection (101), dans laquelle les parois latérales (1) forment un carter de protection essentiellement complet pour l'unité de fermeture (100) et l'unité d'injection (101).

2. Machine de moulage par injection (110) selon la revendication 1, avec des ouvertures du genre fenêtre disposées dans les parois latérales (1) dans la région de l'espace d'outil de l'unité de fermeture (100) et/ou dans la région de l'espace des buses de l'unité d'injection (101).

3. Machine de moulage par injection (110) selon la revendication 2, avec au moins une porte de protection (17) pour l'espace d'outil ou l'espace des buses, prévue en vue de l'ouverture ou de la fermeture d'une telle ouverture du genre fenêtre.

4. Machine de moulage par injection (110) selon la revendication 3, dans laquelle la porte de protection (17) est fixée de façon déplaçable à une paroi latérale (1), de préférence en utilisant un guidage (16, 18) disposé sur la paroi latérale.

5. Machine de moulage par injection (110) selon l'une quelconque des revendications 1 à 4, dans laquelle les parois latérales (1) et/ou les traverses (5, 14) portent les forces massiques de quelques ou de toutes les parties mobiles de l'unité de fermeture (100) et/ou de l'i:nité d'injection (101), des éléments de maintien, de guidage et/ou de fixation (15) pour ces parties étant prévus à cet effet sur les parois latérales (1) et/ou sur les traverses (5, 14).

6. Machine de moulage par injection (110) selon l'une quelconque des revendications 1 à 5, avec une plaque de montage d'outil stationnaire (2) et une plaque de montage d'outil mobile (8) destinées à recevoir des moitiés d'outil de moulage, dans laquelle la plaque de montage d'outil mobile (8) peut être entraînée en translation au moyen d'un entraînement (4, 13), et dans laquelle la plaque de montage d'outil stationnaire (2) et l'élément de support (3) de l'entraînement (4, 13) sont assemblés de façon fixe aux parois latérales (1), de telle sorte que la force de fermeture de l'unité de fermeture (100) soit transmise à la plaque de montage d'outil stationnaire (2) via le système fermé.

7. Machine de moulage par injection (110) selon la revendication 6, avec des guidages (16) disposés sur les parois latérales (1) en vue de recevoir la plaque de montage d'outil mobile (8) et/ou de recevoir l'entraînement (12) du mécanisme de fermeture (4, 13).

8. Machine de moulage par injection (110) selon l'une quelconque des revendications 1 à 7, dans laquelle l'unité d'injection (101) présente un groupe d'injection déplaçable (23), qui est logé entre les parois latérales (1).

9. Machine de moulage par injection (110) selon la revendication 8, dans laquelle les parois latérales (1) sont fixées à la plaque de montage d'outil stationnaire (2) en vue de l'introduction de la force d'application des buses.

10. Machine de moulage par injection (110) selon la revendication 9, dans laquelle il est prévu, sur le côté (26) qui est situé en face de la fixation de la plaque de montage d'outil stationnaire (2) aux parois latérales (1), entre les parois latérales (1), des traverses (5) qui garantissent un écartement défini des parois latérales (1) l'une par rapport à l'autre.

11. Machine de moulage par injection (110) selon l'une quelconque des revendications 8 à 10, avec des guidages (16) disposés sur les parois latérales (1), en vue de recevoir le groupe d'injection (23).

12. Machine de moulage par injection (110) selon l'une quelconque des revendications 1 à 11, dans laquelle les parois latérales (1) sont identiques ou symétriquement identiques.
